# EUROPÄISCHE PATENTANMELDUNG

(11) **EP 1 091 498 A1**
(43) Veröffentlichungstag der Anmeldung: **11.04.2001**
(21) Anmeldenummer: 99810916.9
(22) Anmeldetag: 07.10.1999
(51) Int. Cl.: H04B 1/38, H01Q 1/24, H04M 1/60

(54) **Handfunktelefon und Verfahren zum Betrieb desselben**

(71) Anmelder: Ascom AG, 3000 Bern 14 (CH)
(72) Erfinder: Baiker, Stefan, 4053 Basel (CH)
(74) Vertreter: Roshardt, Werner Alfred, Dipl.-Phys.

(57) **Zusammenfassung**

Ein Handfunkgerät ist mit einer Hör/Sprecheinrichtung (4/5), einem HF-Sender (10/6) und einem Sensor (7) zum Messen eines Abstands zwischen dem Handfunkgerät und einem Körperteil eines Benutzers ausgestattet. Ferner ist eine Schaltung (15) zur Steuerung der Leistung des HF-Senders (10/6) in Abhängigkeit des gemessenen Abstands vorgesehen. Die Schaltung (15) ist derart ausgebildet, daß die Leistung des HF-Senders (10/6) beim Unterschreiten eines vorgegebenen Abstandswertes auf eine gegenüber einer Maximalleistung reduzierte Leistung beschränkt wird.

## Beschreibung

### Technisches Gebiet

Die Erfindung betrifft ein Handfunkgerät mit einer Hör/Sprecheinrichtung, einem HF-Sender und einem Sensor zum Messen eines Abstands zwischen dem Handfunkgerät und einem Körperteil eines Benutzers. Ferner bezieht sich die Erfindung auf ein Verfahren zum Betrieb eines solchen Handfunkgerätes.

### Stand der Technik

Die Verbreitung von Handfunktelefonen hat in den letzten Jahren stark zugenommen. Aufgrund des geringen Gewichtes können sie ständig herum getragen werden. Der Benutzer kann auf diese Weise jederzeit erreicht werden.

Unter dem Druck des Wettbewerbs haben die Anbieter eine Vielzahl von Bedienungsfunktionen entwickelt. Freisprechmöglichkeiten beispielsweise (insbesondere für die Benutzung des Gerätes als Autotelefon) gehören heute fast ebenso zu einem Handfunktelefon wie umfangreiche Programmierfunktionen. Es ist sogar schon bekannt, die Freisprech-Funktion mit einem integrierten Abstandssensor anzusteuern (vgl. z.B. JP 61-258,550).

Die allgemeine Sensibilisierung der Öffentlichkeit für Fragen der versteckten gesundheitsschädlichen Immissionen hat dazu geführt, daß die für die drahtlose Telekommunikation erforderliche elektromagnetische Strahlung als möglicher Schädigungsfaktor in Betracht gezogen wird. Dabei wird davon ausgegangen, daß namentlich für solche Personen eine Gefährdung besteht, die nahe bei einem Sender sind. Beim Telefonieren mit einem Funktelefon ist es nun aber unumgänglich, nahe beim Sender des eigenen Gerätes zu sein.

Es wurde schon vorgeschlagen, die Antenne derart am Gerät anzubringen, daß sie möglichst wenig gegen den Kopf des Benutzers abstrahlt. Die Umsetzung solcher Vorschläge in die Praxis scheitert jedoch daran, daß eine z.B. nach vorn stehende Antenne unpraktisch und unästhetisch ist. Zudem ist auch fraglich, ob es bei den heutigen Miniaturgeräten hinsichtlich der gesundheitsschädlichen Immissionen überhaupt einen wesentlichen Unterschied macht, ob die Antenne an einer als besonders ereignet betrachteten Stelle aussen oder innen am Gerät angebracht ist.

### Darstellung der Erfindung

Aufgabe der Erfindung ist es, ein Handfunkgerät der eingangs genannten Art zu schaffen, bei welchem das Schädigungspotential der vom Gerät abgestrahlten elektromagnetischen Strahlung für den Benutzer effizient reduziert werden kann.

Die Lösung der Aufgabe ist durch die Merkmale des Anspruchs 1 definiert. Gemäss der Erfindung wird die Leistung des HF-Senders in Abhängigkeit von einem gemessenen Abstand (z.B. zum Kopf des Benutzers) gesteuert. Alternativ oder zusätzlich kann die Leistung in Abhängigkeit von der Zeit erfolgen, mit welcher bei einer bestimmten Leistung gesendet worden ist.

Bei einem erfindungsgemässen Handfunktelefon kann zum Beispiel von einer vom Gesetzgeber als unbedenklich qualifizierten Sendeleistung ausgegangen werden. Stellt der Benutzer während des Telefongesprächs fest, daß die Qualität der Verbindung schlecht bzw. unbefriedigend ist, kann er das Handfunktelefon einfach weiter weg vom Körper halten, wodurch dieses seine HF-Leistung automatisch erhöht. Der Benutzer kann also über die Art und Weise, wie er das Gerät hält und bedient, indirekt auf die HF-Sendeleistung Einfluß nehmen. Wird auch die Sendedauer berücksichtigt, kann z. B. eine höhere Sendeleistung während einer bestimmten Zeit zugelassen werden.

Vorzugsweise regelt das Gerät seine Sendeleistung entsprechend den Erfordernissen der Verbindung zur Basisstation. Beispielsweise kann die Sendeleistung reduziert werden, wenn die Signale der Basisstation (zu welcher die Verbindung besteht) stark sind. In diesem Fall darf nämlich davon ausgegangen werden, daß die Funkverbindung an sich gut ist und daß nicht mit maximaler Leistung gesendet werden muß.

Eine andere Möglichkeit besteht darin, daß die Basisstation die empfangene Signalleistung mißt und dem Handfunkgerät im Down Link mitteilt, ob die genannte Leistung ausreichend ist.

Die interne Steuerung des Gerätes kann derart sein, daß beim Unterschreiten eines vorgegebenen Abstands zum Körper des Benutzers die Sendeleistung auf einen maximal zulässigen Wert beschränkt wird. Dies hat zur Folge, daß auch bei einer schlechten Verbindungsqualität die Sendeleistung nicht in einen unerwünschten Bereich hochgeregelt wird. Wenn der Benutzer eine bessere Verbindungsqualität haben will, dann muß er in diesem Fall das Handfunktelefon vom Ohr (z.B. um einige Zentimeter) entfernen.

Um einen unerwünschten Verbindungsabbruch zu vermeiden, kann vorübergehend eine höhere Sendeleistung zugelassen werden, wobei die Dauer der erhöhten Leistung gemessen wird. Wird eine bestimmte Zeitdauer überschritten, kann der Benutzer z. B. zunächst auf diesen Umstand aufmerksam gemacht werden (z. B. mit einem akustischen Signal). Es kann ihm dann die Möglichkeit gegeben werden, durch Drücken einer Quittierungstaste trotzdem weiter zu telefonieren, auf Freisprechen umzuschalten, ein Headset anzuschließen, das Gespräch umzuleiten oder das Gespräch endgültig abzubrechen. Die genannten Maßnahmen können natürlich auch unmittelbar dann zur Verfügung gestellt werden, wenn die Sendeleistung einen Grenzwert überschreitet.

Um die akustische Verständlichkeit auch bei größeren Abständen zu gewährleisten, kann zusätzlich eine abstandsabhängige Lautstärkeregelung des Geräte-Lautsprechers vorgesehen sein. Selbstverständlich kann parallel auch die Empfindlichkeit des Mikrofons geregelt werden.

Das Problem der Lautstärke-Regelung kann z.B. mit einem Ohr- oder Kopfhörer umgangen werden, welcher an einem entsprechenden Anschluß des Telefons angesteckt wird. Es ist auch denkbar, durch Drücken einer Taste auf einen Freisprechmodus umzuschalten.

Vorteilhaft kann es auch sein, wenn das Handfunktelefon mehrere Antennen aufweist und wenn die über die einzelnen Antennen abgestrahlte Leistung entsprechend dem gemessenen Abstand verteilt wird. Sind die Antennen nahe beieinander angeordnet (bezogen auf die Wellenlänge der verwendeten elektromagnetischen Strahlung), dann kann durch die selektive, gewichtete Ansteuerung bzw. Leistungsverteilung die Abstrahlungscharakteristik der Antennenanordnung als Ganzes verändert werden. Beispielsweise kann von einer mehr oder weniger kugelsymmetrischen auf eine keulenförmige (mit einer oder mehreren bevorzugten Richtungen) übergegangen werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
Fig. 1 Eine schematische Darstellung eines Handfunktelefons;
Fig. 2 eine diagrammatische Darstellung des Leistungsbereiches des HF Senders
Fig. 3 ein schematisches Blockschaltbild eines erfindungsgemässen Handfunktelefons.

Grundsätzlich sind in den Figuren gleiche Teile mit gleichen Bezugszeichen versehen.

### Wege zur Ausführung der Erfindung

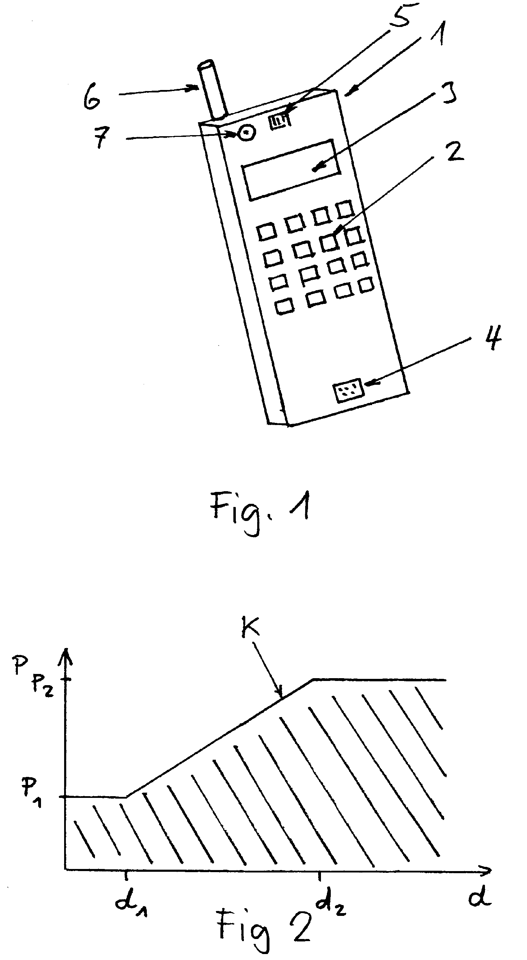

Fig. 1 zeigt beispielhaft ein Handfunktelefon 1 mit den an sich bekannten Elementen der Benutzerschnittstelle: Tastatur 2, Anzeige 3, Mikrofon 4, Lautsprecher 5. Für die Kommunikation mit einer (nicht dargestellten) Basisstation ist in ebenfalls bekannter Weise eine Antenne 6 vorgesehen. (In Fig. 1 ist sie als Stummel gezeigt; selbstverständlich kann sie auch vollständig innerhalb des boxförmigen Gehäuses untergebracht sein.)

An der Vorderseite des Gehäuses (d.h. auf der Seite, auf welcher Mikrofon 4 und Lautsprecher 5 angeordnet sind) ist zusätzlich ein Abstandssensor 7 eingebaut. Im vorliegenden Ausführungsbeispiel ist er bewußt möglichst nahe bei der Antenne 6 plaziert. Der Abstandssensor 7 ist dazu bestimmt und ausgebildet, den Abstand zum Körper (z.B. zum Kopf) des Benutzers zu messen. Indem er wie bereits erwähnt nahe bei der Antenne 6 ist, mißt er im Prinzip den Abstand zwischen der Antenne 6 und dem Körper des Benutzers. Vorzugsweise basieren Abstandssensor 7 und Sensorelektronik 14 auf einem optischen Messprinzip (z.B. Infrarot- oder Laser-Distanzmessung).

Anhand der Fig. 2 soll der Kern der Erfindung erläutert werden, nämlich die abstandsabhängige Regelung der von der Antenne 6 abgestrahlten HF-Leistung. Auf der Abszisse ist der Abstand d und auf der Ordinate die Leistung P aufgetragen. Gemäß der Erfindung wird die HF-Leistung so geregelt, daß sie sich stets im schraffierten Bereich bewegt, welcher durch eine gegebene Kurve K begrenzt ist. Dieser Bereich ist wie folgt definiert: Unterhalb einer vorgegebenen minimalen Distanz d1 bewegt sich die HF-Leistung stets unterhalb eines vorgegebenen, als unbedenklich definierten konstanten Pegels P1. Das Handfunktelefon befindet sich dann typischerweise am bzw. unmittelbar neben dem Ohr des Benutzers. Wird die genannte minimale Distanz d1 überschritten, darf die maximale HF-Leistung erhöht werden. Dabei wird vorzugsweise eine abstandsabhängige Kurve K gewählt (z.B. eine lineare oder quadratische Kurve). Im Übergangsbereich zwischen dl und d2 beträgt der Abstand typischerweise einige Zentimeter bis ca. 20-30 Zentimeter. Beim Überschreiten eines definierten zweiten Abstands d2 kann das Handfunktelefon die maximal mögliche Leistung P2 abstrahlen.

Der in Fig. 2 gezeigte Verlauf der die maximal zulässige Leistung definierenden Kurve K ist nur eine von verschiedenen Möglichkeiten. Es ist z.B. ohne weiteres möglich, einen sprunghaften Übergang vorzusehen (d.h. dl und d2 fallen zusammen). Anstelle der linearen Rampe können auch mehrere Stufen vorgesehen sein. Im Übergangsbereich kann jede sich als sinnvoll erweisende Kurve implementiert werden. Die Leistungssteuerung kann auch so ausgebildet sein, daß sich der Übergangsbereich bis zum Abstand 0 erstreckt (d1 = 0).

Es ist damit zu rechnen, daß die Gefahr einer Schädigung nicht allein durch die Leistung bestimmt wird, sondern auch durch die Dauer, während welcher der Benutzer einer erhöhten Abstrahlung ausgesetzt ist. Aufgrund dieser Erkenntnis empfiehlt es sich, den zulässigen Grenzwert mit einer zeitlichen Kontrolle zu kombinieren. In diesem Rahmen kann z. B. überwacht werden, wie lange ununterbrochen mit einer hohen Sendeleistung in der Nähe des Kopfes des Benutzers gearbeitet worden ist. Es ist auch möglich, die als kritisch eingestuften Sendeperioden zeitlich zu akkumulieren (z. B. über eine Woche, einen Monat, oder ein Jahr hinweg).

Bei einem einfachen Gerät kann die HF-Leistung auf der den zulässigen Leistungsbereich nach oben begrenzenden Kurve geführt sein. Durch eine zusätzlich variable Regelung, welche sich an der für die Aufrechterhaltung einer definierten Verbindungsqualität erforderlichen HF-Leistung orientieren kann, kann das gesundheitsschädliche Potential weiter reduziert werden.

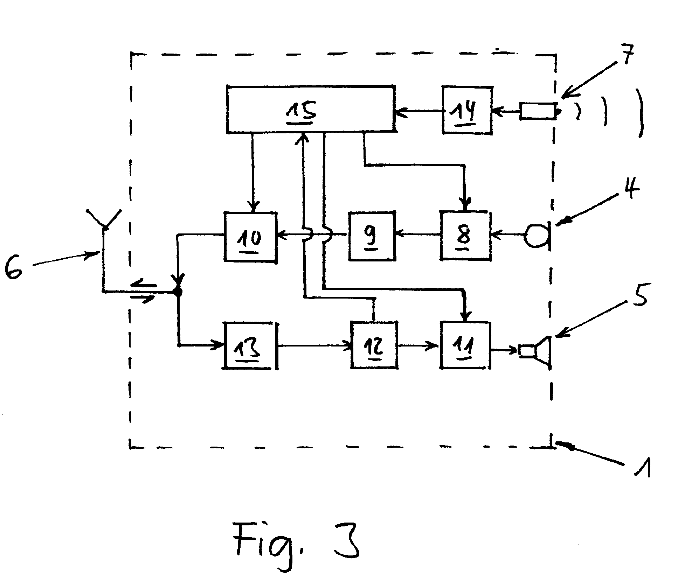

Fig. 3 zeigt eine Schaltungsanordnung zur Durchführung der erfindungsgemässen Steuerung. Das MMI (= Man Machine Interface) wird durch die bereits erwähnten Elemente Mikrofon 4, Lautsprecher 5, Abstandssensor 7 gebildet. Auf der anderen Seite bildet die Antenne 6 quasi die Schnittstelle zur Basisstation. (Die Basisstation kann Teil eines landesweiten Mobilfunksystems oder eine hausinterne Einzelstation sein.)

Das vom Mikrofon 4 gelieferte Signal wird in an sich bekannter Weise von einer NF-Schaltung 8 (NF = Niederfrequenz) aufbereitet, von einem digitalen Modulator 9 in das gewünschte modulierte HF-Signal überführt, mit einem HF-Verstärker 10 verstärkt und über die Antenne 6 abgestrahlt. (HF-Verstärker 10 und Antenne 6 bilden zusammen einen HF-Sender.)

Von der Antenne 6 empfangene Signale werden von einem HF-Verstärker 13 verstärkt und durch einen digitalen Demodulator 12 aufbereitet, so dass die akustischen Signale über die NF-Schaltung 11 und den Lautsprecher 5 abgegeben werden können. Auch diese empfangsseitige Signalverarbeitung gehört zum Stand der Technik.

Neu ist, daß der HF-Verstärker 10 durch eine erfindungsgemäße Steuerung 15 geregelt wird. Diese hat einen ersten Eingang für ein Abstandssignal, welches vom Abstandssensor 7 und der Sensorelektronik 14 detektiert und aufbereitet wird. Ferner ist - gemäß einer besonders bevorzugten Ausführungsform - ein zweiter Eingang für ein von der Basisstation geliefertes Qualitätssignal vorgesehen. Dieser Eingang steht in Verbindung mit dem Demodulator 12.

Neben dem Ausgang für den HF-Verstärker 10 kann die Steuerung 15 noch je einen Ausgang zur Ansteuerung der NF-Schaltungen 8 und 11 aufweisen.

Im Grundsatz wird die maximale Leistung des HF-Verstärkers 10 auf der Basis des anhand der Fig. 2 erläuterten zulässigen Bereichs begrenzt. Dabei wird in Abhängigkeit vom momentanen Abstand der zulässige Maximalwert aus einer abgespeicherten Tabelle ausgelesen und an den HF-Verstärker 10 abgegeben. Zusätzlich kann die Verstärkung in den NF-Schaltungen 8 und 11 mit zunehmendem Abstand angehoben werden. Insbesondere kann eine Umschaltung im Sinne der EP 0 564 160 B1 vorgesehen sein. Selbstverständlich wird die akustische Verstärkung in den NF-Schaltungen 8 und 11 nach einer nach akustischen Prinzipien ausgewählten Kurve geregelt und zeitlich gemittelt, welche im allgemeinen nichts mit der erfindungsgemässen Kurve K zur Begrenzung der maximalen HF-Leistung zu tun hat.

Vorzugsweise ist in der Basisstation eine Schaltung vorgesehen, welche die Stärke des vom Handfunktelefon 1 stammenden Empfangssignals mißt, daraus ein Qualitätssignal ableitet und dieses (z.B. zusammen mit anderen Steuerdaten) im Down Link an das Handfunktelefon 1 übermittelt. Das Qualitätssignal kann z.B. einfach angeben, ob das Handfunktelefon 1 die momentane Sendeleistung (weiter) reduzieren darf oder nicht. Es kann aber auch so ausgestaltet sein, daß das Handfunktelefon 1 feststellen kann, um welchen Wert es seine Sendeleistung reduzieren bzw. auf welchen Wert es den HF-Verstärker 10 begrenzen kann, ohne daß die Verbindung verlorengeht. Im erstgenannten Fall genügt ein binäres Signal, im zweitgenannten werden mehrere Bits zur Verfügung zu stellen sein.

Das Qualitätssignal wird mit einer zusätzlichen Schaltung im Demodulator 12 extrahiert und dann an die Steuerung 15 abgegeben. Diese kann dann bei unverändertem Abstandssignal die abgestrahlte Leistung bei guter Verbindungsqualität weiter reduzieren.

Das beschriebene Ausführungsbeispiel kann selbstverständlich vielseitig abgewandelt werden. Im folgenden sollen einige Varianten angedeutet werden (wobei selbstverständlich keine abschließende Aufzählung angestrebt ist).

Ein Qualitätssignal kann statt in der Basisstation auch im Handfunktelefon 1 selbst erzeugt werden. Dabei wird von der Überlegung ausgegangen, daß zwar die Verbindungsqualität im Up Link und im Down Link unterschiedlich sein kann, daß im allgemeinen aber durchaus eine Korrelation besteht. Entsprechend wird das Qualitätssignal nicht auf die Qualität des Up Links sondern auf diejenige des Down Links gestützt. D.h. das Handfunktelefon ermittelt die Stärke des von der Basisstation kommenden Empfangssignals und leitet daraus das Qualitätssignal ab.

Beim gezeigten Ausführungsbeispiel wurde von einer einzigen Antenne ausgegangen. Selbstverständlich eignet sich die Erfindung auch für Geräte mit einer Mehrzahl von Antennen. So ist es z.B. bekannt, die Empfangsqualität durch sogenannte Antenna Diversity zu verbessern. Sind mehrere verschiedene Antennen vorgesehen, kann der Abstand zwischen der abstrahlenden Antenne und dem Körper allein schon durch die Ansteuerung der vom Körper am weitesten entfernten Antenne vergrößert werden. Je nach Anordnung der Antennen kann auch die Abstrahlcharakteristik der gesamten Struktur verändert werden, indem die Antennen mit unterschiedlichen Leistungen angesteuert werden. So könnte z.B. eine stark vom Körper weg gerichtete Abstrahlcharakteristik gewählt werden, wenn das Handfunktelefon nahe am Ohr des Benutzers ist. Dreht sich dann der Benutzers so, daß die Hauptrichtung der Abstrahlung zur Basisstation zeigt, dann kann die elektromagnetische Energie sogar stärker gebündelt übertragen werden.

Anstelle von optischen Abstandssensoren können auch solche auf der Basis von Ultraschall oder von kapazitiven oder induktiven Methoden verwendet werden. Abstandsinformationen können auch aus der Impedanz-Verstimmung der Antenne abgeleitet werden. Es ist nicht zwingend, den Abstand genau und kontinuierlich bestimmen zu können. Es ist auch möglich, einen Abstandssensor zu verwenden, der nur das Unter-bzw. Überschreiten eines bestimmten Abstands feststellt. Ferner können auch mehrere Abstandssensoren am Gerät verteilt angeordnet werden. Im übrigen braucht der Abstandsensor nicht unbedingt auf der Vorderseite angebracht zu sein.

Es darf nicht vergessen werden, daß nicht nur beim eigentlichen Telefonieren sondern auch im Stand-by Modus, in welchem das Handfunktelefon häufig auch am Gurt getragen wird, über längere Zeit eine Gefahr für die Gesundheit bestehen kann. (Ein Signalaustausch zwischen Handfunkgerät und Basisstation findet z. B. beim Wechsel von eine Funkzelle zur anderen statt.) Auch in diesem Zusammenhang kann die Erfindung selbstverständlich eingesetzt werden. Besonders vorsichtige Benutzer werden das Handfunktelefon bevorzugt mit einer Hör/Sprech-Garnitur verwenden, so daß sie das Handfunktelefon bei Bedarf noch weiter weg vom Körper entfernt benutzen können, ohne daß die akustische Verständlichkeit beeinträchtigt wird. Auf diese Weise kann auch die Vertraulichkeit gewahrt werden, weil der Lautsprecher des Telefons nicht benutzt werden muß.

Die Erfindung beschränkt sich nicht auf Handfunktelefone, sondern eignet sich für jede Art von Kommunikationsgeräten, die üblicherweise von einem Benutzer nahe beim Körper bedient werden und die eine Abstrahlung mit einem Schädigungspotential für die Gesundheit haben.

Zusammenfassend ist festzustellen, dass durch die Erfindung die Möglichkeit geschaffen worden ist, das Schädigungspotential bei der Benutzung eines Handfunktelefons zu minimieren, ohne daß die bestehenden Antennen-Konzepte geändert werden müssen. Auch bei optimierten Antennen-Anordnungen kann die Erfindung einen zusätzlichen Nutzen schaffen.

## Patentansprüche

1. Handfunkgerät mit einer Hör/Sprecheinrichtung (4/5), einem HF-Sender (10/6) und einem Sensor (7) zum Messen eines Abstands zwischen dem Handfunkgerät und einem Körperteil eines Benutzers, dadurch gekennzeichnet, daß eine Schaltung (15) zur Steuerung der Leistung des HF-Senders (10/6) in Abhängigkeit des gemessenen Abstands vorgesehen ist.

2. Handfunkgerät insbesondere nach Anspruch 1, dadurch gekennzeichnet, daß die Schaltung (15) zur Steuerung der Leistung des HF-Senders (10/6) in Abhängigkeit einer Zeitdauer erfolgt, während der mit einer bestimmten Leistung gesendet worden ist.

3. Handfunkgerät nach Anspruch 1, dadurch gekennzeichnet, daß die Schaltung (15) derart ausgebildet ist, daß die Leistung des HF-Senders (10/6) beim Unterschreiten eines vorgegebenen Abstandswertes (d2) auf eine gegenüber einer Maximalleistung reduzierte Leistungsgrenze beschränkt wird.

4. Handfunkgerät nach einem der Ansprüche 1 oder 2, dadurch gekennzeichnet, daß die Leistung des HF-Senders (10/6) in Abhängigkeit von einem eine Verbindungsqualität charakterisierenden Signal einstellbar ist.

5. Handfunkgerät nach einem der Ansprüche 1 bis 4, dadurch gekennzeichnet, daß eine Lautstärke der Hör/Sprecheinrichtung (4/5) in Abhängigkeit vom Abstandssignal geregelt ist.

6. Handfunkgerät nach einem der Ansprüche 1 bis 4, dadurch gekennzeichnet, daß mehrere Antennen vorgesehen sind und daß die Schaltung derart ausgebildet ist, daß die Leistung des HF-Signals in Abhängigkeit vom gemessenen Abstand auf die verschiedenen Antennen unterschiedlich verteilt werden kann.

7. Verfahren für den Betrieb eines Handfunkgerätes, welches mit einer Hör/Sprecheinrichtung (4/5), einem HF-Sender (10/6) und einem Sensor (7) zum Messen des Abstands zwischen dem Handfunkgerät und einem Körperteil eines Benutzers ausgerüstet ist, dadurch gekennzeichnet, daß eine Leistung des HF-Senders (10/6) in Abhängigkeit des gemessenen Abstands geregelt wird.

8. Verfahren nach Anspruch 6, dadurch gekennzeichnet, daß die Leistung des HF-Senders (10/6) beim Unterschreiten eines vorgegebenen Abstandswertes (d2) auf eine gegenüber einer Maximalleistung (P2) reduzierte Leistung beschränkt wird.

9. Verfahren nach einem der Ansprüche 6 oder 7, dadurch gekennzeichnet, daß die Leistung des HF-Senders (10/6) in Abhängigkeit von einem eine Verbindungsqualität charakterisierenden Signal geregelt wird.

10. Verfahren nach Anspruch 8, dadurch gekennzeichnet, daß die Verbindungsqualität in einer Basisstation ermittelt und von dieser an das Handfunkgerät (1) übertragen wird.

11. Verfahren nach einem der Ansprüche 6 bis 9, dadurch gekennzeichnet, daß die Leistung des HF-Senders in Abhängigkeit vom gemessenen Abstand auf mehrere verschiedene Antennen verteilt wird.
